# EUROPÄISCHE PATENTANMELDUNG

(11) **EP 3 222 904 A1**
(43) Veröffentlichungstag der Anmeldung: **27.09.2017**
(21) Anmeldenummer: 17160907.6
(22) Anmeldetag: 14.03.2017
(51) Int. Cl.: F21S 8/10, G01S 7/491, B60Q 1/00, G01S 17/89, G01S 7/481, G01S 7/493, G01S 7/499, B60Q 7/00, B60Q 1/18, B62K 11/00

(54) **INFRAROT-LEUCHTE FÜR EIN FAHRZEUG**

(30) Priorität: 16.03.2016 DE 102016204370
(71) Anmelder: Diederich, Rainer, 51580 Reichshof-Denklingen (DE)
(72) Erfinder: DIEDERICH Rainer, 51580 Reichshof-Denklingen (DE)
(74) Vertreter: dompatent von Kreisler Selting Werner - Partnerschaft von Patent- und Rechtsanwälten mbB

(57) **Zusammenfassung**

Die Erfindung betrifft eine Infrarot-Leuchte (10) für ein Fahrzeug (12), mit mindestens einer Infrarotlichtquelle (14), einer Einstellvorrichtung (18) zur Auswahl eines Betriebsmodus der Infrarot-Leuchte (10) als Fahrzeug-Frontleuchte oder Fahrzeug-Rückleuchte und einer Ansteuereinheit (39) zur Ansteuerung der mindestens einen Infrarotlichtquelle (14) zur Ausführung einer von mehreren möglichen Leuchtenfunktionen in dem ausgewählten Betriebsmodus. Der Ansteuereinheit (33) zur Auswahl der Leuchtenfunktion ist von extern eine Leuchtenfunktion-Auswahlinformation (33a, 33b, 33c, 33d) zuführbar. Der Ansteuereinheit (33) ist zur Auswahl des Betriebsmodus von der Einstellvorrichtung (18) eine Betriebsmodus-Auswahlinformation (33) zuführbar.

## Beschreibung

Die Erfindung betrifft eine Infrarot-Leuchte für ein Fahrzeug, insbesondere für ein Quad oder für einen Geländewagen.

Leuchten für Fahrzeuge sind im Allgemeinen in zahlreichen Formen bekannt. Während die meisten Fahrzeugleuchten im sichtbaren Bereich arbeiten, sind in bestimmten Anwendungen Infrarot-Leuchten von besonderem Interesse. Beispielsweise können Infrarot-Leuchten in Fahrzeugen eingesetzt werden, um in Kombination mit einem Nachtsichtgerät die Fahrbahn und darauf befindliche Objekte auch bei Dunkelheit sichtbar zu machen. Solche Systeme, die Infrarot-Leuchten umfassen, können insbesondere für einen Jäger hilfreich sein, der bei Dunkelheit auf die Jagd geht oder aber auch für Sicherheitsmitarbeiter, die bei Dunkelheit ein Gelände oder etwa ein Waldstück zu überwachen haben.

In US 6 520 669 B1 ist eine Infrarot-Leuchte für ein Fahrzeug offenbart, die eine Infrarotlichtquelle aufweist, die als Fahrzeug-Frontleuchte oder Fahrzeug-Rückleuchte verwendet werden kann. Eine Ansteuereinheit ermöglicht die Auswahl einer von mehreren Leuchtfunktionen. Bei dieser Infrarot-Leuchte ist keine Einstellvorrichtung zur Auswahl eines Betriebsmodus der Infrarot-Leuchte als Fahrzeug-Frontleuchte oder Fahrzeug-Rückleuchte vorgesehen.

Auch in DE 103 48 117 A1 ist eine Infrarot-Leuchte für ein Fahrzeug offenbart, das mindestens eine Infrarotlichtquelle aufweist, die als Fahrzeug-Frontleuchte oder Fahrzeug-Rückleuchte verwendet werden kann. Auch bei dieser Infrarot-Leuchte ist nicht vorgesehen, dass eine Einstellvorrichtung zur Auswahl eines Betriebsmodus der Infrarot-Leuchte als Fahrzeug-Frontleuchte oder Fahrzeug-Rückleuchte konfiguriert ist.

Weiterhin ist in US 7 125 134 B1 ein Fahrzeug mit mehreren Infrarot-Leuchten offenbart, die als Fahrzeug-Frontleuchte oder Fahrzeug-Rückleuchte am Fahrzeug angebracht sind. Über ein Bedienelement kann zwischen einer Beleuchtung im sichtbaren Bereich oder einer Infrarot-Beleuchtung umgeschaltet werden. Eine Einstellvorrichtung zur Auswahl eines Betriebsmodus der Infrarot-Leuchte als Fahrzeug-Frontleuchte oder Fahrzeug-Rückleuchte geht aus dieser Druckschrift nicht hervor.

Häufig sind neben Infrarot-Frontleuchten auch Infrarot-Rückleuchten wünschenswert. Dies ist insbesondere dann der Fall, wenn ein Team von Personen bei Dunkelheit mit mehreren Fahrzeugen unterwegs ist und die einzelnen Teammitglieder einander erkennen und miteinander kommunizieren möchten, ohne dass Personen, die dem Team nicht angehören, sie erkennen und deren Kommunikation mitverfolgen können. Beispielsweise kann ein Sicherheitsteam aus mehreren Personen bestehen, die jeweils ein mit Infrarot-Leuchten ausgestattetes Fahrzeug führen und jeder der Teammitglieder über ein Nachtsichtgerät verfügt. Auf diese Weise sind lediglich die Sicherheitsteammitglieder in der Lage, die Fahrzeuge der anderen Teammitglieder zu erkennen. Da sich die Anforderungen an Infrarot-Frontleuchten häufig von den Anforderungen an Infrarot-Rückleuchten insbesondere hinsichtlich der Ausgangsleistungen unterscheiden, müssten unterschiedliche Leuchten an der Frontseite und an der Rückseite des Fahrzeugs eingesetzt werden.

Der Erfindung liegt die Aufgabe zu Grunde, Infrarot-Leuchten für ein Fahrzeug zu schaffen, die sowohl als Infrarot-Frontleuchte als auch als Infrarot-Rückleuchte einsetzbar ist. Eine weitere Aufgabe der Erfindung ist es, dass die Infrarot-Leuchte verschiedene Leuchtenfunktionen ausführen kann.

Zur Lösung der vorstehend genannten Aufgabe wird erfindungsgemäß eine Infrarot-Leuchte für ein Fahrzeug mit
- mindestens einer Infrarotlichtquelle
- einer Einstellvorrichtung zur Auswahl eines Betriebsmodus der Infrarot-Leuchte als Fahrzeug-Frontleuchte oder Fahrzeug-Rückleuchte und
- einer Ansteuereinheit zur Ansteuerung der mindestens einen Infrarotlichtquelle zur Ausführung einer von mehreren möglichen Leuchtenfunktionen in dem ausgewählten Betriebsmodus vorgeschlagen,
- wobei der Ansteuereinheit zur Auswahl der Leuchtenfunktion von extern eine Leuchtenfunktion-Auswahlinformation zuführbar ist und
- wobei der Ansteuereinheit zur Auswahl des Betriebsmodus von der Einstellvorrichtung eine Betriebsmodus-Auswahlinformation zuführbar ist.

Ein wesentlicher Vorteil der erfindungsgemäßen Infrarot-Leuchte ist, dass diese sowohl als Fahrzeug-Frontleuchte, als auch als Fahrzeug-Rückleuchte einsetzbar ist. Je nachdem, welcher der beiden Betriebsmodi gewünscht ist, kann über die Einstellvorrichtung dieser Betriebsmodus festgelegt werden, wobei jeder Betriebsmodus bestimmte Leuchtenfunktionen bietet, die für den entsprechenden Modus ausgelegt sind. Ein weiterer Vorteil der erfindungsgemäßen Infrarot-Leuchte ist die Verfügbarkeit zahlreicher Leuchtenfunktionen, die einerseits der Beleuchtung von Objekten dienen können und andererseits auch die Kommunikation zwischen verschiedenen Teilnehmern ermöglichen.

Bei der Infrarotlichtquelle kann es sich um eine einzelne Quelle oder aber auch um eine Kombination von mehreren einzelnen Infrarotlichtquellen handeln. Insbesondere kann vorgesehen sein, dass die Infrarotlichtquelle dimmbar ist, so dass ihre Helligkeit bzw. Intensität bei Bedarf einstellbar ist. Die Einstellvorrichtung kann vorzugsweise manuell betätigbar sein, so dass der Benutzer der Infrarotleuchte einstellen kann, in welchem Betriebsmodus die Infrarot-Leuchte arbeiten soll. Insbesondere können dabei ein Betriebsmodus der Infrarot-Leuchte als Fahrzeug-Frontleuchte, Fahrzeug-Rückleuchte oder Taschenlampe auswählbar sein. Die zusätzliche Ansteuereinheit dient dazu, die konkrete Leuchtenfunktion in einem der zuvor genannten Betriebsmodi zu aktivieren. Bei den Leuchtenfunktionen kann es sich dabei insbesondere um eine Abblendlichtfunktion, eine Volllichtfunktion, eine Blinklichtfunktion, eine Not-Signal-Funktion, eine Rücklichtfunktion oder eine Bremslichtfunktion handeln. Auch können unterschiedliche Helligkeitsfunktionen und weitere kodierte Signale vorgesehen sein.

Die erfindungsgemäße Infrarot-Leuchte kann sowohl als Infrarot-Frontleuchte als auch als Infrarot-Rückleuchte eines Fahrzeugs eingesetzt werden, während der gewünschte Betriebsmodus einfach und bequem über die vorzugsweise manuelle Einstellvorrichtung ausgewählt werden kann. Dadurch entfällt die Notwendigkeit, unterschiedliche Infrarot-Leuchten für die Frontseite und die Rückseite des Fahrzeugs bereitstellen und auch unterschiedliche Ersatzleuchten für die Front- und Rückseite des Fahrzeugs zur Verfügung stellen zu müssen. Auch stellt die erfindungsgemäße Infrarot-Leuchte neben der Beleuchtungsfunktion auch weitere Funktionen zur Verfügung, durch die beispielsweise die verschiedenen Fahrzeugführer miteinander kommunizieren können.

In einer bevorzugten Ausführungsform der erfindungsgemäßen Infrarot-Leuchte kann vorgesehen sein, dass die Leuchtenfunktionen mindestens zwei Intensitätsfunkionen und/oder mindestens eine Blinkfunktion und/oder mindestens eine Funktion zur Ausgabe eines kodierten Signals umfasst. Die unterschiedlichen Intensitätsfunktionen können dabei beispielsweise dadurch realisiert werden, dass die Intensität der Infrarotlichtquelle gedimmt wird. Im Falle des Vorliegens mehrerer Infrarotlichtquellen kann vorgesehen sein, dass die Intensität aller Infrarotlichtquellen gesteuert wird oder aber auch, dass die Anzahl der eingeschalteten Infrarotlichtquellen variiert wird und die Intensität der einzelnen eingeschalteten Infrarotlichtquellen konstant bleibt. Dabei kann die Einstellung der Intensität einer Infrarotlichtquelle vorzugsweise über Pulsweitenmodulation erfolgen. Alternativ kann vorgesehen sein, dass die Intensität einer Infrarotlichtquelle durch eine Steuerung einer Versorgungsquelle erfolgt. Das ausgegebene kodierte Signal kann dabei insbesondere ein SOS-Signal, ein spezielles Warnsignal, das die Teilnehmer vor einer spezifischen Gefahr warnt, oder ein Rückzugssignal darstellen. Die Intensitätsfunktionen können dabei vorzugsweise Intensitäten der mindestens einen Infrarotlichtquelle vorsehen, die 1 %, 20 %, 50 % oder 100 % der maximalen Intensität der mindestens einen Infrarotlichtquelle vorsehen. Bei der Blinkfunktion kann vorgesehen sein, dass unterschiedliche Blinkgeschwindigkeiten eingestellt werden können, wobei die unterschiedlichen Fahrzeugführer auch über die Geschwindigkeit der Blinksignale miteinander kommunizieren können. In einer bevorzugten Ausgestaltungsform der erfindungsgemäßen Infrarot-Leuchte kann vorgesehen sein, dass die Leuchtenfunktion-Auswahlinformation mittels mindestens eines im Fahrzeug angeordneten Bedienelements wählbar ist. Dabei kann ein Blinker, ein Bremspedal oder ein Gaspedal eines Fahrzeugs als Bedienelement dienen. Auch kann vorgesehen sein, dass ein explizit zur Ansteuerung der Infrarot-Leuchte ausgelegter Drehsteller als Bedienelement dient. Vorzugsweise wird die Leuchtenfunktion-Auswahlinformation über eine Leitung an die Infrarot-Leuchte geführt. Auch kann vorgesehen sein, dass die Übertragung der Leuchtenfunktion-Auswahlinformation drahtlos (beispielsweise über eine Bluetooth-Verbindung) an die Infrarot-Leuchte übertragen wird.

Weiterhin bevorzugt kann in Ausgestaltung der erfindungsgemäßen Infrarot-Leuchte vorgesehen sein, dass die Infrarotlichtquelle mindestens eine Infrarot-LED aufweist. Der Vorteil des Einsatzes von Infrarot-LEDs liegt darin, dass diese besonders einfach anzusteuern und zudem kostengünstig erhältlich sind. Dabei können insbesondere Hochleistungs-LEDs mit Aufnahmeleistungen von mehreren Watt eingesetzt werden. Auch können neben klassischen LEDs, die als bedrahtete Bauelemente ausgeführt sind, auch SMD-LEDs (SMD = Surface Mounted Device) ausschließlich oder in Kombination mit klassischen LEDs eingesetzt werden. Im Gegensatz zu den üblichen bedrahteten LEDs ist die Leistungsaufnahme und die optische Ausgangsleistung bei SMD-LEDs häufig geringer. Insbesondere ist es daher vorteilhaft, bedrahtete LEDs und SMD-LEDs in Kombination in einer Infrarot-Leuchte zu verwenden. Auf diese Weise können beispielsweise die SMD-LEDs aktiviert werden, wenn eine besonders niedrige Ausgangsleistung gewünscht ist, während beispielsweise die Hochleistungs-LEDs aktiviert werden, wenn eine besonders hohe Ausgangsleistung gewünscht ist. Auf diese Weise bietet die erfindungsgemäße Infrarot-Leuchte einen sehr breiten Arbeitsbereich und ist daher dafür geeignet, sowohl sehr niedrige Ausgangsleistungen zu generieren, als auch sehr hohe Ausgangsleistungen. Da für Infrarot-Rückleuchten üblicherweise deutlich geringere Ausgangsleistungen der Infrarot-Leuchte gefordert sind als bei einer Infrarot-Frontleuchte, eignet sich die erfindungsgemäße Infrarot-Leuchte, die sowohl bedrahtete LEDs als auch SMD-LEDs aufweist, sowohl für den Betriebsmodus als Frontleuchte als auch für den Betriebsmodus als Rückleuchte.

In einer Ausführungsform der Erfindung kann vorgesehen sein, dass die mindestens eine Infrarot-LED eine Emissionswellenlänge von 880 nm, 840 nm, 850 nm, 890 nm, 940 nm oder 950 nm aufweist. Dabei zeigt sich, dass sich LEDs mit den vorstehend genannten Emissionswellenlängen besonders gut für die Anwendungen der zuvor beschriebenen Infrarot-Leuchte eignen. Insbesondere zeigen LEDs mit den genannten Emissionswellenlängen eine besonders gute Eignung in Kombination mit Nachtsichtgeräten.

Zur weiteren Ausgestaltung der Erfindung kann vorgesehen sein, dass die Einstellvorrichtung einen Schalter aufweist. Dieser Schalter, der manuell betätigbar ist, kann dabei insbesondere ein DIP-Schalter (DIP = Dual In-Line Package) sein. Der Vorteil von DIP-Schaltern ist, dass diese besonders einfach im Aufbau und kostengünstig erhältlich sind. Der DIP-Schalter kann also dafür verwendet werden, die Voreinstellung der Infrarot-Leuchte vorzunehmen. Dabei weist ein DIP-Schalter in der Regel einen oder mehrere Schiebe- oder Hebelschalter auf, die jeweils zwei Positionen einnehmen können. Beispielsweise sind mit einem zweipoligen DIP-Schalter mit zwei Hebelschaltern insgesamt vier mögliche Betriebsmodi und mit einem vierpoligen DIP-Schalter mit vier Hebelschaltern insgesamt bis zu 16 verschiedene Betriebsmodi auswählbar. Durch die Verwendung eines Schalters, insbesondere eines DIP-Schalters, der bevorzugt an einer Platine befestigt ist, an der ebenfalls die LEDs angeordnet sind, wird es ermöglicht, den Betriebsmodus der Infrarot-Leuchte auf einfachste Art einzustellen.

In einer besonders bevorzugten Ausführungsform der erfindungsgemäßen Infrarot-Leuchte kann vorgesehen sein, dass die Ansteuereinheit einen Mikrocontroller aufweist. Der Mikrocontroller dient in diesem Fall dazu, in einem zuvor ausgewählten Betriebsmodus die gewünschte Leuchtenfunktion zu gewährleisten. Insbesondere kann vorgesehen sein, dass der Mikrocontroller einen oder mehrere Treiber ansteuert, die für den Betrieb einer oder mehrerer LEDs vorgesehen sind. Der Vorteil des Einsatzes eines Mikrocontrollers liegt darin, dass dieser einfach und flexibel programmierbar ist und zudem kostengünstig erhältlich ist. Der Mikrocontroller kann dafür ausgelegt sein, die Intensität einer oder mehrerer Infrarotlichtquellen einzustellen oder die Infrarotlichtquellen mit einem Blinklichtsignal oder einem andersartigen kodierten Signal (SOS-Signal, Warnsignal, Störsignal) anzusteuern.

In einer bevorzugten Ausführungsform der Erfindung kann vorgesehen sein, dass die Infrarot-Leuchte einen Infrarotlichtfilter aufweist. Dabei ist die Infrarotlichtquelle hinter dem Infrarotlichtfilter angeordnet, so dass ein bestimmter Anteil des Infrarotlichtspektrums herausgefiltert wird. Als Infrarotlicht-Filter kommt insbesondere ein Filter in Betracht, wie dieser in DE 10 2012 024 773 A1 offenbart ist. Durch die Verwendung eines derartigen Filters kann das Emissionsspektrum der Infrarot-Leuchte derart angepasst werden, dass es für die Anwendung mit einem Nachtsichtgerät optimiert ist.

Weiterhin kann in einer bevorzugten Ausführungsform der erfindungsgemäßen Infrarot-Leuchte vorgesehen sein, dass die Infrarot-Leuchte ein Infrarotlichtquellen-Gehäuse mit mindestens einem Abdichtelement aufweist. Durch das Infrarotlichtquellen-Gehäuse ist die Infrarot-Leuchte insbesondere gegenüber Schmutz und Staub geschützt. Das eingesetzte Abdichtelement dient auch dazu, dass die Infrarot-Leuchte gegen Feuchtigkeit und Wasser geschützt ist. Insbesondere kommen als Abdichtelement O-Ringe in Betracht, die zwischen zwei Teilen des Infrarotlichtquellen-Gehäuses eingespannt werden und auf diese Art ein Eindringen von Wasser und Feuchtigkeit unterbinden.

Weiterhin kann bei der erfindungsgemäßen Infrarot-Leuchte vorgesehen sein, dass als Betriebsmodus auch ein Taschenlampen-Modus auswählbar ist. Der Taschenlampen-Modus kann dabei besondere Leuchtenfunktionen bereitstellen, die speziell bei der Verwendung der Infrarot-Leuchte als Taschenlampe geeignet sind. Insbesondere kommen hierbei verschiedene Intensitätsfunktionen, eine Blinklicht- sowie eine Stroboskopfunktion, Notsignalfunktionen und Warnfunktionen in Betracht.

Weiterhin wird gemäß der Erfindung eine Infrarot-Leuchte für die Verwendung als Taschenlampe mit
- mindestens einer Infrarotlichtquelle,
- einer Einstellvorrichtung zur Auswahl eines Betriebsmodus der Infrarotlicht-Leuchte als Fahrzeug-Frontleuchte oder Fahrzeug-Rückleuchte,
- einer Ansteuereinheit zur Ansteuerung der mindestens einen Infrarotlichtquelle zur Ausführung einer von mehreren möglichen Leuchtenfunktionen,
- einem an die Infrarot-Leuchte andockbaren Gehäuse,
- einem Bedienelement zur Auswahl der Leuchtenfunktion der Infrarot-Leuchte und
- einer Energiequelle für die Stromversorgung der Infrarot-Leuchte vorgeschlagen,
- wobei der Ansteuereinheit zur Auswahl der Leuchtenfunktion von dem Bedienelement eine Leuchtenfunktion-Auswahlinformation zuführbar ist und
- zur Auswahl des Betriebsmodus von der Einstellvorrichtung eine Betriebsmodus-Auswahlinformation zuführbar ist.

In dieser Ausführungsform der erfindungsgemäßen Infrarot-Leuchte erfolgt die Stromversorgung nicht mehr über das Fahrzeug, sondern über eine autarke Energiequelle. Diese kann insbesondere in Form eines Akkumulators ausgeführt sein. Auch wird bei dieser Ausführungsform die Leuchtenfunktion-Auswahlinformation nicht mehr von extern, d. h. üblicherweise vom Fahrzeug zugeführt, sondern von dem Bedienelement, welches bevorzugt an dem andockbaren Gehäuse angeordnet ist. Die Infrarot-Leuchte ist somit sowohl in Kombination mit einem Fahrzeug einsetzbar, als auch separat als Taschenlampe.

Weiterhin wird zur Lösung der vorstehend genannten Aufgabe ein Fahrzeug, insbesondere ein Quad, mit einer vorstehend genannten Infrarot-Leuchte vorgeschlagen. Ein solches Fahrzeug hat den Vorteil, dass es zum einen nicht mehr auf unterschiedliche Ersatz-Leuchten für den Betrieb als Frontleuchten bzw. Rückleuchten angewiesen ist. Darüber hinaus bietet das erfindungsgemäße Fahrzeug diverse Leuchtfunktionen, die nicht nur zur Beleuchtung einer Straße sowie auf dieser befindlichen Objekte geeignet sind, sondern auch für die Kommunikation mit anderen Fahrzeugführern.

Die Erfindung wird nachfolgend anhand zweier Ausführungsbeispiele unter Bezugnahme auf die Zeichnungen näher erläutert. Im Einzelnen zeigen dabei:
- Fig. 1: ein Geländefahrzeug mit vier Frontleuchten,
- Fig. 2: eine Querschnittsansicht eines ersten Ausführungsbeispiels der erfindungsgemäßen Infrarot-Leuchte mit auf einer Platine angeordneten Infrarotlichtquellen,
- Fig. 3: eine Draufsicht der in der Fig. 2 dargestellten Platine mit auf der Platine angeordneten Infrarotlichtquellen,
- Fig. 4: eine Rückansicht der in der Fig. 2 dargestellten Infrarot-Leuchte mit sechs elektrischen Anschlüssen,
- Fig. 5: eine schematische Darstellung der in der Fig. 2 dargestellten Infrarot-Leuchte und
- Fig. 6: ein zweites Ausführungsbeispiel der erfindungsgemäßen Infrarot-Leuchte mit einem Taschenlampengehäuse.

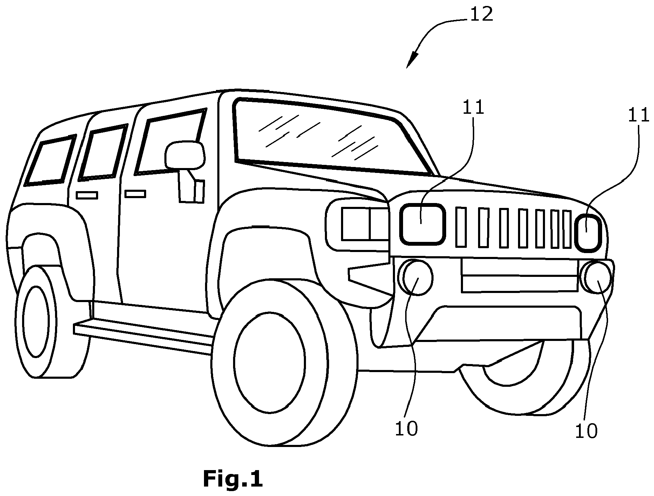

In der Fig. 1 sind zwei erfindungsgemäße Infrarot-Leuchten 10 dargestellt, die unterhalb zweier herkömmlicher Sichtbarlicht-Leuchten 11 in einem Geländefahrzeug 12 eingesetzt sind.

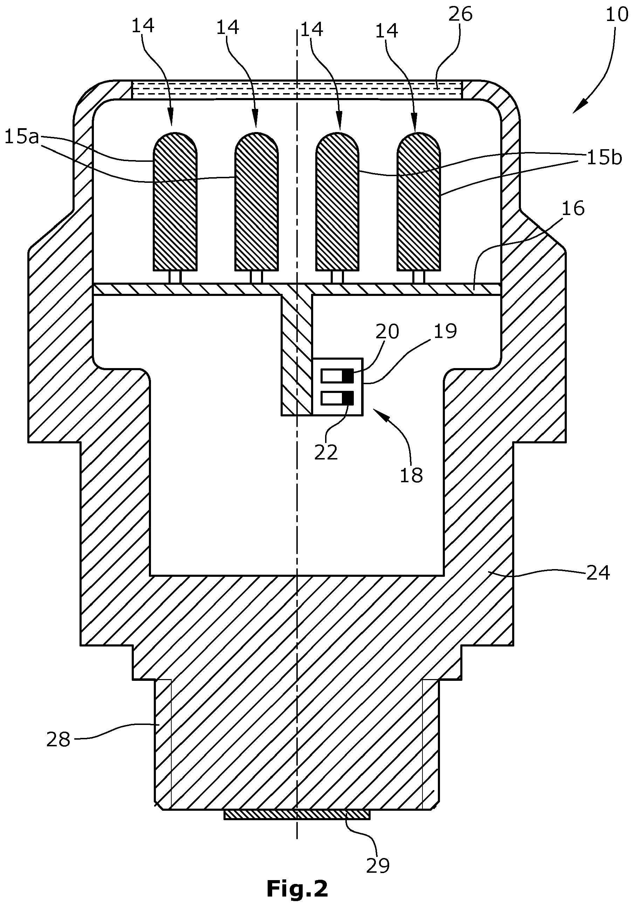

In der Fig. 2 ist eine Querschnittsansicht einer der in der Fig. 1 abgebildeten Infrarot-Leuchten 10 dargestellt. In der Querschnittsansicht sind vier Infrarotlichtquellen 14 zu erkennen, die in diesem Ausführungsbeispiel als bedrahtete LEDs 15a, 15b ausgeführt sind. Diese LEDs 15a, 15b sind auf einer Platine 16 angeordnet. In diesem Ausführungsbeispiel unterscheiden sich die LEDs 15a, 15b strukturell nicht voneinander. Diese sind lediglich in die zwei Gruppen der LEDs 15a und der LEDs 15b eingeteilt, da die einzelnen Gruppen der LEDs 15a, 15b in diesem Ausführungsbeispiel unabhängig voneinander ansteuerbar sind.

Ebenfalls auf der Platine 16 ist eine Einstellvorrichtung 18 angebracht, die im vorliegenden Ausführungsbeispiel als DIP-Schalter 19 ausgeführt ist. Bei dem abgebildeten DIP-Schalter 19 handelt es sich um einen zweipoligen DIP-Schalter 19 mit einem ersten Helbelschalter 20 und einem zweiten Helbelschalter 22. Jeder der beiden Hebelschalter 20, 22 kann zwei Positionen einnehmen. Dadurch kann der zweipolige DIP-Schalter 19 insgesamt zwischen vier verschiedenen Zuständen schalten. Die verschiedenen Zustände können im vorliegenden Ausführungsbeispiel der erfindungsgemäßen Infrarot-Leuchte 10 vier verschiedenen Betriebsmodi entsprechen. Beispielsweise können die Betriebsmodi einen Frontlichtmodus, einen Rücklichtmodus und einen Taschenlampenmodus umfassen. Auch ist es möglich, dass die Betriebsmodi mehrere Frontlichtmodi, Rücklichtmodi oder Taschenlampenmodi umfassen.

Die wesentlichen Komponenten der Infrarot-Leuchte 10, nämlich die LEDs 15a, 15b, die Platine 16 und der DIP-Schalter 19 befinden sich in dem in der Fig. 2 dargestellten Ausführungsbeispiel in einem Leuchtengehäuse 24. Das Leuchtengehäuse 24 weist auf einer Seite eine Öffnung auf, die mit einer Schutzscheibe 26 verschlossen ist. Im Betrieb der Infrarot-Leuchte 10 kann das durch die LEDs 15a, 15b erzeugte Licht durch die Schutzscheibe 26 austreten. Alternativ kann die Schutzscheibe 26 auch durch einen vorstehend beschriebenen Infrarot-Filter ersetzt werden.

Das Leuchtengehäuse 24 weist ein Leuchtengehäuse-Außengewinde 28 auf, welches dazu dient, mit einem Fahrzeug oder einem Taschenlampengehäuse verbunden zu werden. Durch das Leuchtengehäuse-Außengewinde 28 kann die Infrarot-Leuchte 10 durch eine einfache Schraubverbindung innerhalb kürzester Zeit und ohne die Notwendigkeit von Werkzeugen beispielsweise mit einem Fahrzeug 12 verbunden werden.

An der Unterseite der Infrarot-Leuchte 10 ist zudem ein Anschlussstecker 29 dargestellt, in dem einzelne Anschlusskontakte zur Spannungsversorgung und zur Ansteuerung der Infrarot-Leuchte 10 angeordnet sind.

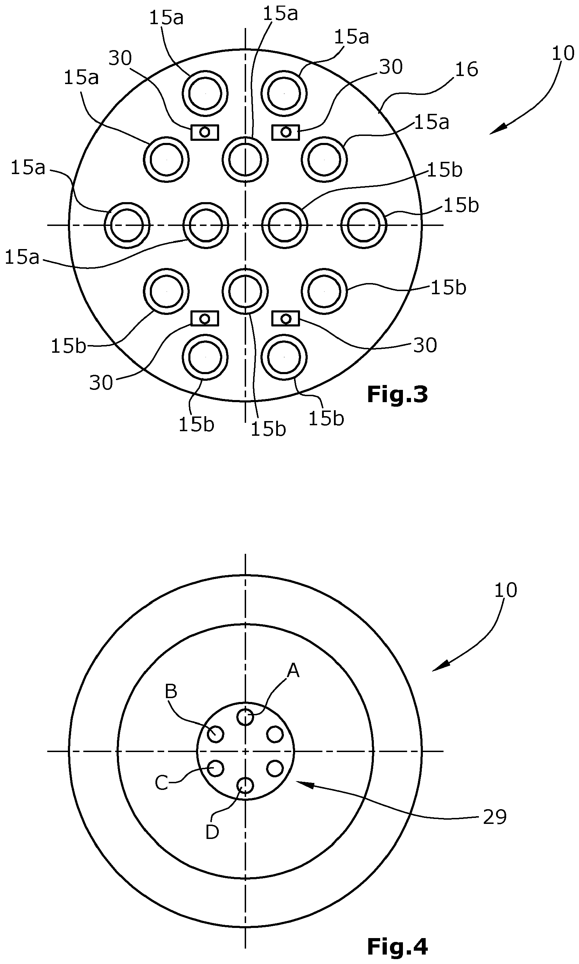

In der Fig. 3 ist eine Draufsicht der in der Fig. 2 dargestellten Platine 16 abgebildet. Wie in dieser Fig. zu erkennen ist, sind auf der Platine 16 insgesamt vierzehn bedrahtete LEDs 15a, 15b sowie vier weitere SMD-LEDs 30 angeordnet. Somit befinden sich insgesamt 18 LEDs 15a, 15b, 30 auf der Platine 16, die nach Belieben angesteuert werden können. Um die Gesamthelligkeit der Infrarot-Leuchte 10 einzustellen, kann sowohl die Helligkeit aller LEDs angepasst werden oder alternativ die Gesamthelligkeit durch das Zuschalten bzw. Abschalten einzelner LEDs 15a, 15b, 30 variiert werden. Da die bedrahteten LEDs 15a, 15b typischerweise eine deutlich höhere Ausgangsleistung aufweisen, werden diese bevorzugterweise angesteuert, wenn eine hohe Helligkeit gewünscht ist. Andererseits werden bevorzugterweise die SMD-LEDs 30 aktiviert, wenn nur geringe Ausgangsleistungen gewünscht sind, beispielsweise wenn die Infrarot-Leuchte 10 im Rücklichtmodus betrieben wird und daher eine geringe Ausgangsleistung ausreichend ist.

In der Fig. 4 ist eine Rückansicht der in der Fig. 2 dargestellten Infrarot-Leuchte 10 abgebildet. In dieser Fig. ist zu erkennen, dass die Infrarot-Leuchte 10 auf ihrer Rückseite sechs elektrische Anschlüsse aufweist. Im vorliegenden Ausführungsbeispiel werden lediglich vier dieser Anschlüsse für die Ansteuerung der Infrarotlichtquellen verwendet. Diesen vier Anschlüssen A, B, C, D werden von extern zur Auswahl der Leuchtenfunktion eine Leuchtenfunktion-Auswahlinformation zugeführt. Diese Information kann beispielsweise dadurch erfolgen, dass einer oder mehrere der verwendeten Anschlusskontakte A, B, C, D auf ein Massepotential gelegt werden. Die Leuchtenfunktion-Auswahlinformation wird an eine Ansteuereinheit weitergeleitet, die in der Fig. 4 nicht dargestellt ist. Die Ansteuereinheit kann dann, abhängig von der Leuchtenfunktion-Auswahlinformation sowie der Betriebsmodus-Auswahlinformation die gewünschte Leuchtenfunktion zur Verfügung stellen.

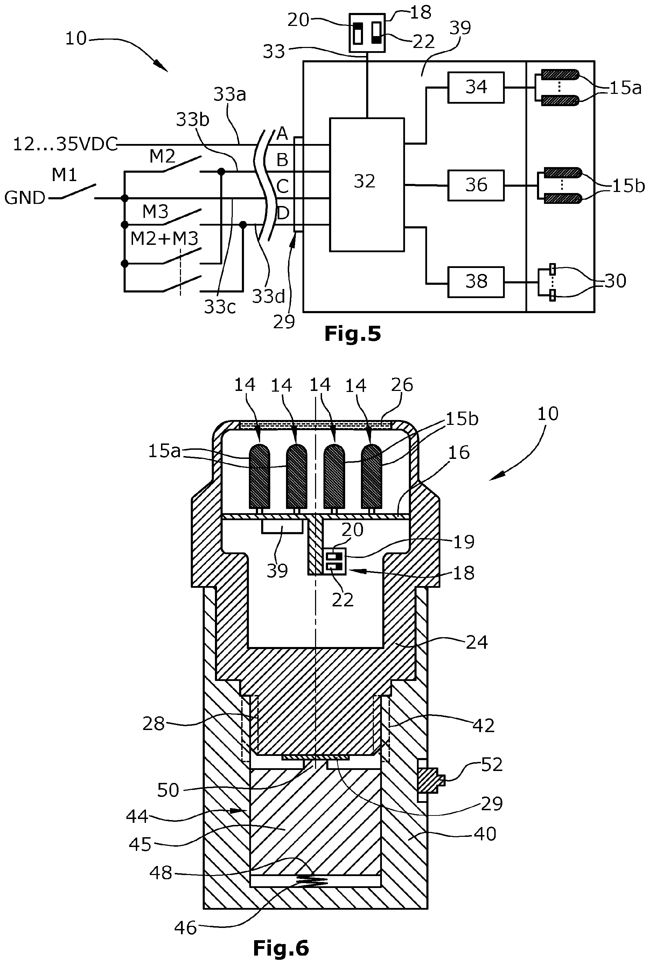

In der Fig. 5 ist das Prinzip der Ansteuerung der Infrarot-Leuchte 10 abgebildet. Wie zu erkennen ist, weist die Infrarot-Leuchte 10 einen Mikrocontroller 32 auf, dem eine Betriebsmodus-Auswahlinformation 33 und eine Leuchtenfunktion-Auswahlinformation 33a, 33b, 33c, 33d zugeführt wird. Die Betriebsmodus-Auswahlinformation ist im vorliegenden Ausführungsbeispiel abhängig von der Position der beiden Hebelschalter 20, 22 des DIP-Schalters 19. Weiterhin ist in diesem Ausführungsbeispiel die Leuchtenfunktion-Auswahlinformation 33a, 33b, 33c, 33d abhängig von den Schaltzuständen der Schalter M1, M2 sowie M3. Beispielsweise kann vorgesehen sein, dass während die Leuchtenfunktion-Auswahlinformation 33a stets einen konstanten Wert liefert, die Werte der Leuchtenfunktion-Auswahlinformation 33b, 33c, 33d von den Schalterstellungen der M1, M2 und M3 abhängen. Diese Schalter können beispielsweise fahrzeugseitig angebracht sein und durch die Betätigung von im Fahrzeug befindlichen Bedienelementen geöffnet und geschlossen werden. Beispielsweise können die Schalter M1, M2, M3 durch die Betätigung eines Gaspedals, eines Bremspedals, eines Blinkers oder eines eigens für die Bedienung der Infrarot-Leuchte 10 ausgelegten Bedienelements geöffnet bzw. geschlossen werden. Abhängig von der Betriebsmodus-Auswahlinformation 33 und der Leuchtenfunktion-Auswahlinformation 33a, 33b, 33c, 33d ist der Mikrocontroller 32 in der Lage, die Treiber 34, 36, 38 derart anzusteuern, dass die jeweiligen LEDs die gewünschte Helligkeit bzw. das gewünschte Signal ausgeben. Im vorliegenden Ausführungsbeispiel sind die Treiber derart ausgelegt, dass der erste Treiber 34 die Helligkeit der sieben LEDs 15a steuert, während der zweite Treiber 36 die Helligkeit der sieben LEDs 15b steuert und der dritte Treiber 38 die Helligkeit der vier SMD-LEDs 30 steuert.

In der nachfolgenden Tabelle ist beispielhaft ein Belegungsplan für die Infrarot-Leuchte dargestellt.

**Tabelle 1: Belegungsplan**

| DIP-Schalter Pol 1 / Pol 2 | M1 (C) | M1 + M2 (C + B) | M1 + M3 (C + D) | M1 + M2 + M3 (C + B + D) |
|---|---|---|---|---|
| aus / aus (Frontlicht) | Abblendlicht (20% LED) | Volllicht (100% LED) | Blinklicht | Not-Signal |
| aus / an | Reserve | Reserve | Reserve | Reserve |
| aus / an | Reserve | Reserve | Reserve | Reserve |
| an / an (Rücklicht) | Rücklicht (50% SMD) | Bremslicht (1% LED) | Blinklicht | Not-Signal |

Wie aus der Tabelle 1 hervorgeht, sind in diesem Ausführungsbeispiel lediglich zwei der vier möglichen Schaltzustände des zweipoligen DIP-Schalters belegt. Die weiteren Schaltzustände sind als Reservezustände vorgesehen, wobei einer der Reservezustände für den vorstehend genannten Taschenlampenmodus vorgesehen werden kann. Weiterhin ist aus der Tabelle 1 ersichtlich, dass in Abhängigkeit der Zustände der Schalter M1 bis M3 vier verschiedene Leuchtenfunktionen ausgewählt werden können. Auch können in diesem Ausführungsbeispiel im Betriebsmodus als Fahrzeug-Rücklicht vier verschiedene Funktionen ausgewählt werden. Insbesondere ist dabei zu erkennen, dass im Betriebsmodus als Fahrzeug-Rückleuchte deutlich geringere Ausgangsleistungen zur Verfügung gestellt werden, nämlich beispielsweise 1 % der maximalen LED-Leistung oder 50 % der SMD-LED-Leistung. Der Belegungsplan ist rein beispielhaft zu betrachten. Es ist selbstverständlich, dass sich die Erfindung nicht auf einen Belegungsplan, wie dieser in der Tabelle 1 dargestellt ist, beschränkt.

In der Fig. 6 ist ein zweites Ausführungsbeispiel der erfindungsgemäßen Infrarot-Leuchte 10 dargestellt, die zusätzlich ein Taschenlampengehäuse 40 aufweist. Dabei ist das Leuchtengehäuse 24 über das Leuchtengehäuse-Außengewinde 28 und das Taschenlampengehäuse-Innengewinde 42 mit dem Taschenlampengehäuse 40 verschraubbar. Alternativ ist es auch möglich, dass das Leuchtengehäuse 24 mit dem Taschenlampengehäuse 40 durch einen Bajonettverschluss verbindbar ist. Auf diese Weise lässt sich die Infrarot-Leuchte 10 einfach und schnell mit dem Taschenlampengehäuse 40 verbinden und die für ein Fahrzeug 12 vorgesehene Infrarot-Leuchte 10 ist innerhalb kürzester Zeit in eine Taschenlampe konvertierbar. Innerhalb des Taschenlampengehäuses 40 befindet sich wie in der Fig. 6 dargestellt ein Energiespeicher 44, der in diesem Ausführungsbeispiel als Batterie 45 ausgelegt ist. Die Batterie 45 wird durch eine Spiralfeder 46 gegen den Anschlussstecker 29 des Leuchtengehäuses 24 gedrückt, so dass der erste Pol 48 der Batterie 45 gegen die Spiralfeder 46 gedrückt und der zweite Pol 50 der Batterie 45 gegen den Anschlussstecker 29 gedrückt wird. Die Zuleitungen, die von der Spiralfeder 46 bzw. von dem zweiten Pol 50 der Batterie 45 zu den entsprechenden Anschlusskontakten führen, ist in der Fig. 6 nicht explizit dargestellt.

An einer Seite des Taschenlampengehäuses 40 ist in diesem Ausführungsbeispiel ein Bedienelement 52 angeordnet, das der Auswahl der Leuchtenfunktion im Taschenlampen-Betriebsmodus dient. Beispielsweise kann durch Betätigung des Bedienelements 52 zwischen verschiedenen Helligkeitsstufen, einer Stroboskoplichtfunktion und einer Warnlichtfunktion ausgewählt werden. Die Zuleitungen, die von dem Bedienelement 52 zu den entsprechenden Anschlusskontakten A, B, C, D führen, sind in der Fig. 6 ebenfalls nicht explizit dargestellt.

### Bezugszeichenliste

- 10: Infrarot-Leuchte
- 11: Sichtbarlicht-Leuchte
- 12: Fahrzeug
- 14: Infrarotlichtquelle
- 15a: LED
- 15b: LED
- 16: Platine
- 18: Einstellvorrichtung
- 19: DIP-Schalter
- 20: Hebelschalter
- 22: Hebelschalter
- 24: Leuchtengehäuse
- 26: Schutzscheibe
- 28: Leuchtengehäuse-Außengewinde
- 29: Anschlussstecker
- 30: SMD-LED
- 32: Mikrocontroller
- 33: Betriebsmodus-Auswahlinformation
- 33a: Leuchtenfunktion-Auswahlinformation
- 33b: Leuchtenfunktion-Auswahlinformation
- 33c: Leuchtenfunktion-Auswahlinformation
- 33d: Leuchtenfunktion-Auswahlinformation
- 34: Treiber
- 36: Treiber
- 38: Treiber
- 39: Ansteuereinheit
- 40: Taschenlampengehäuse
- 42: Taschenlampengehäuse-Innengewinde
- 44: Energiespeicher
- 45: Batterie
- 46: Spiralfeder
- 48: erster Pol der Batterie
- 50: zweiter Pol der Batterie
- 52: Bedienelement
- M1: Schalter
- M2: Schalter
- M3: Schalter
- A: Anschlusskontakt
- B: Anschlusskontakt
- C: Anschlusskontakt
- D: Anschlusskontakt

## Patentansprüche

1. Infrarot-Leuchte für ein Fahrzeug, mit
- mindestens einer Infrarotlichtquelle (14),
- einer Einstellvorrichtung (18) zur Auswahl eines Betriebsmodus der Infrarot-Leuchte (10) als Fahrzeug-Frontleuchte oder Fahrzeug-Rückleuchte und
- einer Ansteuereinheit (39) zur Ansteuerung der mindestens einen Infrarotlichtquelle (14) zur Ausführung einer von mehreren möglichen Leuchtenfunktionen in dem ausgewählten Betriebsmodus,
- wobei der Ansteuereinheit (39) zur Auswahl der Leuchtenfunktion von extern eine Leuchtenfunktion-Auswahlinformation (33a, 33b, 33c, 33d) zuführbar ist und
- wobei der Ansteuereinheit (39) zur Auswahl des Betriebsmodus von der Einstellvorrichtung (18) eine Betriebsmodus-Auswahlinformation (33) zuführbar ist.

2. Infrarot-Leuchte nach Anspruch 1, **dadurch gekennzeichnet, dass** die Leuchtenfunktionen mindestens zwei Intensitätsfunktionen und/oder mindestens eine Blinkfunktion und/oder mindestens eine Funktion zur Ausgabe eines kodierten Signals umfasst.

3. Infrarot-Leuchte nach Anspruch 1 oder 2, **dadurch gekennzeichnet, dass** die Leuchtenfunktion-Auswahlinformation (33a, 33b, 33c, 33d) mittels mindestens eines im Fahrzeug (12) angeordneten Bedienelements wählbar ist.

4. Infrarot-Leuchte nach einem der Ansprüche 1 bis 3, **dadurch gekennzeichnet, dass** die Infrarotlichtquelle (14) mindestens eine Infrarot-LED (15a, 15b, 30) aufweist.

5. Infrarot-Leuchte nach einem der Ansprüche 1 bis 4, **dadurch gekennzeichnet, dass** die mindestens eine LED (15a, 15b, 30) eine Emissionswellenlänge von 880 nm, 840 nm, 850 nm, 890 nm, 940 nm oder 950 nm aufweist.

6. Infrarot-Leuchte nach einem der Ansprüche 1 bis 5, **dadurch gekennzeichnet, dass** die Einstellvorrichtung (18) einen Schalter aufweist.

7. Infrarot-Leuchte nach einem der Ansprüche 1 bis 6, **dadurch gekennzeichnet, dass** die Ansteuereinheit einen Mikrocontroller (32) aufweist.

8. Infrarot-Leuchte nach einem der Ansprüche 1 bis 7, **gekennzeichnet durch** einen Infrarotlicht-Filter, der von der Infrarotlichtquelle (14) aus betrachtet in Abstrahlrichtung derselbigen angeordnet ist.

9. Infrarot-Leuchte nach einem der Ansprüche 1 bis 8, **gekennzeichnet durch** ein Infrarotlichtquellen-Gehäuse (24) mit mindestens einem Abdichtelement.

10. Infrarot-Leuchte nach einem der Ansprüche 1 bis 9, **dadurch gekennzeichnet, dass** als Betriebsmodus auch ein Taschenlampen-Modus auswählbar ist.

11. Infrarot-Leuchte für die Verwendung als Taschenlampe mit
- mindestens einer Infrarotlichtquelle (14),
- einer Einstellvorrichtung (18) zur Auswahl eines Betriebsmodus der Infrarotlicht-Leuchte (10) als Fahrzeug-Frontleuchte oder Fahrzeug-Rückleuchte,
- einer Ansteuereinheit (39) zur Ansteuerung der mindestens einen Infrarotlichtquelle (14) zur Ausführung einer von mehreren möglichen Leuchtenfunktionen,
- einem an die Infrarot-Leuchte (10) andockbaren Gehäuse (40),
- einem Bedienelement (52) zur Auswahl der Leuchtenfunktion der Infrarot-Leuchte (10) und
- einer Energiequelle (44) für die Stromversorgung der Infrarot-Leuchte (10),
- wobei der Ansteuereinheit (39) zur Auswahl der Leuchtenfunktion von dem Bedienelement (52) eine Leuchtenfunktion-Auswahlinformation (33a, 33b, 33c, 33d) zuführbar ist und
- zur Auswahl des Betriebsmodus von der Einstellvorrichtung (18) eine Betriebsmodus-Auswahlinformation (33) zuführbar ist.

12. Fahrzeug, insbesondere Quad, mit einer Infrarot-Leuchte (10) nach einem der Ansprüche 1 bis 10.
